(19) Europäisches Patentamt
European Patent Office
Office européen des brevets

(11) **EP 3 793 101 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **20188810.4**

(22) Anmeldetag: **31.07.2020**

(51) Internationale Patentklassifikation (IPC):
**H04B 7/08** $^{(2006.01)}$

(52) Gemeinsame Patentklassifikation (CPC):
**H04B 7/0848**

(54) **VERFAHREN UND VORRICHTUNG ZUR RAUMFILTERUNG ZUMINDEST EINES AUTOKORRELIERTEN NUTZSIGNALS AUS EINEM EMPFANGSSIGNAL EINER GRUPPENANTENNE**

METHOD AND DEVICE FOR SPATIAL FILTERING OF AT LEAST ONE AUTOCORRELATED USEFUL SIGNAL FROM A RECEIVED SIGNAL OF A GROUP ANTENNA

PROCÉDÉ ET DISPOSITIF DE FILTRAGE SPATIAL D'AU MOINS UN SIGNAL UTILE SOUMIS À UNE AUTOCORRÉLATION À PARTIR D'UN SIGNAL REÇU D'UNE ANTENNE DE GROUPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2019   DE 102019124399**

(43) Veröffentlichungstag der Anmeldung:
**17.03.2021   Patentblatt 2021/11**

(73) Patentinhaber: **Fraunhofer-Gesellschaft zur Förderung
der angewandten Forschung e.V.
80686 München (DE)**

(72) Erfinder: **Demissie, Bruno
53343 Wachtberg (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
- **YUNG-FANG CHEN ET AL: "Reduced-Dimension Blind Space-Time 2-D Rake Receivers for DS-CDMA Communication Systems", IEEE TRANSACTIONS ON SIGNAL PROCESSING, IEEE SERVICE CENTER, NEW YORK, NY, US, Bd. 48, Nr. 5, 1. Mai 2000 (2000-05-01), XP011059013, ISSN: 1053-587X**
- **RAMOS J ET AL: "A low-complexity space-time RAKE receiver for DS-CDMA communications", IEEE SIGNAL PROCESSING LETTERS, IEEE SERVICE CENTER, PISCATAWAY, NJ, US, Bd. 4, Nr. 9, 1. September 1997 (1997-09-01), Seiten 262-265, XP011428142, ISSN: 1070-9908, DOI: 10.1109/97.623044**

EP 3 793 101 B1

**Beschreibung**

**Technisches Gebiet**

Die Erfindung betrifft ein Verfahren zur adaptiven Raumfilterung bei der Array-Signalverarbeitung von z.B. Gruppenantennen mit dem Ziel der verbesserten Detektion von Signalen mit bekannten Autokorrelationseigenschaften. Daher werden im Rahmen dieser Erfindung einerseits das Gebiet der Array-Signalverarbeitung und insbesondere der adaptiven Raumfilterung sowie andererseits das Gebiet der Detektion von Signalen mit bekannten Signaleigenschaften miteinander verknüpft.

**Hintergrund**

Bei dem Stand der Technik entsprechenden Verfahren zur Detektion von Nutzsignalen innerhalb eines Quellsignals wird die Tatsache ausgenutzt, dass die Autokorrelationsfunktion des zu detektierenden Signals bekannte Muster aufweist. Dieser Ansatz zur Detektion von schwachen Signalen gehört schon seit langer Zeit zum Stand der Technik, siehe z.B. die Arbeit von Y. W. Lee, T. P. Cheatham, Jr. und J. B. Wiesner, "The application of correlation functions in the detection of small signals in noise", Tech. Rep. of Massachusetts Inst. of Technology, October 1949. Weitere Ausführungen finden sich in den Druckschriften EP-B-1 543 665 und DE-A-10 2009 035 524. Damit lassen sich selbst solche Signale noch sicher detektieren, deren Leistung deutlich kleiner als die Leistung des überlagerten Rauschens ist. Der Grund dafür liegt darin, dass das überlagerte Rauschen typischerweise zeitlich unkorreliert ist und damit zwar das Gesamtsignal stört, dagegen aber asymptotisch keinen Beitrag zur Autokorrelation für zeitliche Verschiebungen ungleich Null liefert.

Allerdings liefern die bekannten Verfahren nur mangelhafte Ergebnisse, sobald andere Signale mit komplementären Autokorrelationseigenschaften überlagert sind, insbesondere wenn deren Leistung die des Nutzsignals übertrifft. Eine gemäß dem Stand der Technik naheliegende Lösung dieses Problems wäre es, das Signal mit einer Gruppenantenne zu empfangen und das zu detektierende Signal mittels adaptiver Raumfilterung herauszufiltern. Der bekannteste adaptive Raumfilter wird nach dem MVDR (Minimum Variance Distortionless Response)-Verfahren berechnet, welches versucht, die Summe der Leistungen der Störsignale sowie die Rauschleistung am Ausgang des Raumfilters zu minimieren. Im Folgenden wird dieses grundlegende Verfahren kurz skizziert, da dies zum Verständnis der Erläuterungen des erfindungsgemäßen Verfahrens beiträgt.

Ein $M$-elementiges Empfangssignal $\boldsymbol{x}(t) = [x_1(t),...,x_M(t)]^T$ einer Gruppenantenne mit $M$ Antennenelementen (d.h. $M$ Antennenkanälen) bestehe aus den folgenden drei Anteilen:

$$\boldsymbol{x}(t) = \boldsymbol{s}(t) + \boldsymbol{i}(t) + \boldsymbol{n}(t) \qquad (1)$$

Dabei bezeichnet $t$ den Abtastzeitpunkt und $(\cdot)^T$ bezeichnet die Transposition eines Vektors bzw. einer Matrix. Weiterhin bezeichnet $\boldsymbol{s}(t)$ das zu detektierende Zielsignal und $\boldsymbol{i}(t)$ das Störsignal bzw. die Summe der Störsignale. $\boldsymbol{n}(t)$ bezeichnet das additive Rauschen, welches zeitlich unkorreliert ist, d.h. $E[\boldsymbol{n}(t)\boldsymbol{n}^H(t')] = \sigma^2 \delta_{t,t'}$. Dabei bezeichnet $E$ den Erwartungswert, $(\cdot)^H$ bezeichnet das hermitesch transponierte eines Vektors bzw. einer Matrix und $\delta_{t,t'}$ ist das Kronecker-Delta.

Es wird im Allgemeinen angenommen, dass das Zielsignal unkorreliert mit den Störsignalen und dem Rauschsignal ist und durch

$$\boldsymbol{s}(t) = s(t)\boldsymbol{a}(\vartheta) \qquad (2)$$

ausgedrückt werden kann. Hierbei bezeichnet $s(t)$ die Wellenform des Zielsignals und $\boldsymbol{a}(\vartheta)$ ist der Steuerungsvektor in Richtung $\vartheta$ des Zielsignals.

Das Signal $y(t)$ am Ausgang des Raumfilters mit Raumfilterkoeffizientenvektor $\boldsymbol{w}$ (d.h. die Komponenten von $\boldsymbol{w}$ sind die Gewichtungsfaktoren für die einzelnen Antennenelemente bzw. Antennenkanäle) ist durch

$$y(t) = \boldsymbol{w}^H \boldsymbol{x}(t) \qquad (3)$$

gegeben.

Für den Fall, dass der Steuerungsvektor des Zielsignals, welches als Punktquelle angenommen wird, genau bekannt ist, ist der optimale Raumfilterkoeffizientenvektor $\boldsymbol{w}$ durch

$$W_{MVDR} = \frac{R_{i+n}^{-1} a(\vartheta)}{a^H(\vartheta) R_{i+n}^{-1} a(\vartheta)} \qquad (4)$$

gegeben. Dies setzt eine genaue Kalibrierung der Antenne sowie eine genaue Ermittlung der Einfallsrichtung voraus. Ferner bedeutet "optimal", dass das Signal-zu-Stör-plus-RauschVerhältnis (engl. Signal-to-Interference-plus-Noise-Ratio, SINR) maximiert wird:

$$SINR \equiv \frac{E[|w^H s|^2]}{E[|w^H(i+n)|^2]} = \frac{\sigma_s^2 [w^H a(\vartheta)]^2}{w^H R_{i+n} w} \qquad (5)$$

Dabei bezeichnet $\sigma_s^2 = E[|s(t)|^2]$ die Signalleistung und

$$R_{i+n} = E[(i(t) + n(t))(i(t) + n(t))^H]$$

die Stör-plus-Rausch-Kovarianz-Matrix.

Das Ergebnis für das MVDR-Raumfilter ergibt sich durch Minimierung des Nenners in dem Ausdruck für das SINR unter der Nebenbedingung, dass die Antwort des Filters in Richtung des Zielsignals gleich eins ist, also $w^H a(\vartheta)$ = 1 gilt.

Das korrespondierende Minimierungsproblem lautet also:

$$\min_{w} w^H R_{i+n} w \qquad \text{mit} \qquad w^H a(\vartheta) = 1 \qquad (6)$$

In Praxis wird die Stör-plus-Rausch-Kovarianz-Matrix $R_{i+n}$ durch die Sample-Kovarianz-Matrix $\hat{R} = \frac{1}{K} \sum_{t=1}^{T} x(t) x^H(t)$ ersetzt.

Ein verallgemeinertes MVDR-Kriterium unter der Verwendung von sogenannten Raum-Zeit-Korrelationsmatrizen wird von Yung-Fang Chen, Michael D. Zoltowski, Javier Ramos, Chanchal Chatterjee und Vwani R. Roychowdhury in "Reduced-Dimension Blind Space-Time 2-D Rake Receivers for DS-CDMA Communication Systems", IEEE Trans. Sig. Proc. Vol 48, pp. 1521-1536, Juni 2000, beschrieben. Es wird dabei angenommen, dass das gesuchte Empfangssignal unter Mehrwegeausbreitung zur Antenne gelangt, (Siehe Gleichung (2) in obiger Quelle.), d.h. aus mehreren Pfaden mit zeitlichen Verzögerungen besteht. Aufgabe in obiger Quelle ist es, ein Raum-Zeit Filter zu berechnen, das den Effekt der Mehrwegeausbreitung, aufgrund derer das Signal mehrfach jeweils zeitlich verzögert empfangen wird, rückgängig macht. Das Filter hat daher auch eine zeitliche Komponente, die die Länge der zeitlichen Verzögerungen (multipliziert mit der Anzahl an Antennenelementen) hat.

Die gleiche Aufgabe wie in obiger Quelle wird von Javier Ramos, Michael D. Zoltowski und Hui Liu in "A Low-Complexity Space-Time RAKE Receiver for DS-CDMA Communications" in IEEE Sig. Proc. Letters, Vol. 4, pp. 262-265, Sept. 1997, gelöst. Auch hier wird das Problem der Mehrwegeausbreitung behandelt und es werden relative Zeitverzögerungen und optimale Gewichte von Raumfiltern berechnet. Anders als in der Arbeit von Yung-Fang Chen et al. werden allerdings Matrizen betrachtet, deren Dimension gleich der Anzahl an AntennenElementen ist. Diese Matrizen werden unter der Annahme berechnet, dass das DS-CDMA Signal synchronisiert ist und dass die Spreizcodes bekannt sind.

Weitere bekannte Verfahren basieren im Wesentlichen auf dem MVDR-Verfahren und berücksichtigen zusätzlich, dass der Steuerungsvektor des Zielsignals nicht exakt bekannt ist. Ist dies nämlich der Fall, kommt es zum sogenannten "self-nulling", d.h. der Selbstauslöschung des Zielsignals, welches ja auch in der Sample-Kovarianz-Matrix enthalten ist. Verbesserungen des MVDR-Verfahrens werden in dem Übersichtsartikel S. A. Vorobyov, "Principles of minimum variance robust adaptive beamforming design", in Signal Processing 93 (2013), Seiten 3264-3277 diskutiert.

Alle diese Verbesserungen befassen sich aber nicht mit dem speziellen Fall, dass man nach der Raumfilterung Zielsignale mittels bekannter Autokorrelationseigenschaften detektieren möchte.

Der Nachteil der bekannten adaptiven Raumfilterungs-Verfahren besteht dann darin, dass das überlagerte Rauschen und die Störsignale nur entsprechend ihrer jeweiligen Leistung gewichtet unterdrückt werden. Aufgrund der endlichen Anzahl an Antennenelementen ist die Raumfilterung nicht beliebig flexibel, um alle Rausch- und Störkompo-

**EP 3 793 101 B1**

nenten perfekt zu unterdrücken. Dies kann dazu führen, dass bei sehr starkem Rauschen die Störkomponenten nicht ausreichend unterdrückt werden, um das Zielsignal sicher detektieren zu können. Die zweite Schwierigkeit bei der Anwendung bekannter Raumfilterungs-Verfahren ergibt sich aus dem Umstand, dass man Signale anhand bekannter Muster in ihrer Autokorrelation noch tief verborgen im Rauschen detektieren kann, aber eine genau Ermittlung ihres Peilwerts, der in die Berechnung des herkömmlichen Raumfilters einfließt, nicht mehr möglich ist, so dass es zur Selbstauslöschung des Zielsignals kommt.

Es ist daher eine Aufgabe der vorliegenden Erfindung, eine Möglichkeit bereitzustellen, um Störsignale mit Autokorrelationseigenschaften deutlich stärker als unkorreliertes Rauschen unterdrücken zu können, damit Zielsignale bzw. Nutzsignale sicher mittels bekannter Merkmale in ihrer Autokorrelation detektiert werden können.

## Darstellung der Erfindung

Die erfindungsgemäße Aufgabe wird durch ein Verfahren und eine Vorrichtung zur Raumfilterung zumindest eines autokorrelierten Nutzsignals aus einem Empfangssignal einer Gruppenantenne gemäß den unabhängigen Ansprüchen gelöst. Weitere Aspekte sowie Weiterbildungen der Erfindung sind in den abhängigen Ansprüchen, der folgenden Beschreibung sowie in den Figuren beschrieben.

Im folgenden werden die Ausführungsbeispiele in allgemeiner Form beschrieben, detailliertere, erfindungsgemässe Ausführungen finden sich in den Ansprüchen und an späterer Stelle.

Ein erstes Ausführungsbeispiel betrifft ein Verfahren zur Raumfilterung zumindest eines autokorrelierten Nutzsignals aus einem Empfangssignal einer Gruppenantenne in Form von linear oder zweidimensional verteilt angeordneten (z.B. Einzel-)Antennen oder Antennenelementen. Das Verfahren umfasst das Empfangen des Empfangssignals der Gruppenantenne. Die Gruppenantenne umfasst eine Mehrzahl an Antennenkanälen. Ferner umfasst das Verfahren das Berechnen von Gewichten eines adaptiven Raumfilters für die einzelnen Antennenkanäle der Mehrzahl an Antennenkanälen. Weiterhin umfasst das Verfahren das Filtern des Empfangssignals mit dem adaptiven Raumfilter, um das zumindest eine autokorrelierte Nutzsignal aus dem Empfangssignal zu extrahieren. Das Verfahren ist dadurch gekennzeichnet, dass das Berechnen der Gewichte des adaptiven Raumfilters das Optimieren einer Bewertungsfunktion umfasst, bei der es sich um die Summe von Betragsquadraten von Autokorrelationen eines Ausgangssignals des adaptiven Raumfilters für eine Mehrzahl an Zeitverzögerungen unter der Nebenbedingung einer konstanten Filterantwort des adaptiven Raumfilters bezüglich des Steuerungsvektors der Gruppenantenne für das zumindest eine autokorrelierte Nutzsignal handelt. Die Summe sollte so klein wie möglich sein.

Ein zweites Ausführungsbeispiel betrifft eine Vorrichtung zur Raumfilterung zumindest eines autokorrelierten Nutzsignals aus einem Empfangssignal einer Gruppenantenne. Die Vorrichtung umfasst eine Eingangsschnittstelle, die dazu eingerichtet ist, das Empfangssignal der Gruppenantenne zu empfangen. Die Gruppenantenne umfasst eine Mehrzahl an Antennenkanälen. Ferner umfasst die Vorrichtung eine Prozessierschaltung, die dazu eingerichtet ist, Gewichte eines adaptiven Raumfilters für die einzelnen Antennenkanäle der Mehrzahl an Antennenkanälen zu berechnen und das Empfangssignal mit dem adaptiven Raumfilter zu filtern, um das zumindest eine autokorrelierte Nutzsignal aus dem Empfangssignal zu extrahieren. Die Vorrichtung ist dadurch gekennzeichnet, dass die Prozessierschaltung dazu eingerichtet ist, die Gewichte des adaptiven Raumfilters durch ein Optimieren einer Summe von Betragsquadraten von Autokorrelationen eines Ausgangssignals des adaptiven Raumfilters für eine Mehrzahl an Zeitverzögerungen unter der Nebenbedingung einer konstanten Filterantwort des adaptiven Raumfilters bezüglich eines Steuerungsvektors des zumindest einen autokorrelierten Nutzsignals zu berechnen.

Ein drittes Ausführungsbeispiel betrifft ein nicht-flüchtiges maschinenlesbares Medium, auf dem ein Programm gespeichert ist, mit einem Programmcode zum Durchführen des hierin vorgeschlagen Verfahrens, wenn das Programm auf einem Prozessor oder einer programmierbaren Hardwarekomponente ausgeführt wird. Das nicht-flüchtige maschinenlesbare Medium kann beispielsweise als Nurlesespeicher (ROM = Read Only Memory), programmierbarer Nurlesespeicher (PROM = Programmable Read-Only Memory), löschbarer programmierbarer Nurlesespeicher (EPROM = Erasable Programmable Read-Only Memory), elektrisch löschbarer programmierbarer Nurlesespeicher (EEPROM = Electrically Erasable Programmable Read-Only Memory), FLASH-Speicher oder als ein anderer magnetischer oder elektrischer Speichers ausgeführt sein, auf dem elektronisch lesbare Kontrollsignale gespeichert sind, die mit dem Prozessor oder der programmierbaren Hardwarekomponente derart zusammenwirken können oder zusammenwirken, dass das jeweilige Verfahren durchgeführt wird. Eine programmierbare Hardwarekomponente kann durch einen Prozessor, einen Computerprozessor (CPU = Central Processing Unit), einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein. Der Programmcode kann unter anderem als Quellcode, Maschinencode oder Bytecode sowie als anderer Zwischencode vorliegen.

Ferner betrifft ein viertes Ausführungsbeispiel ein Programm mit einem Programmcode zum Durchführen des hierin vorgeschlagen Verfahrens, wenn das Programm auf einem Prozessor oder einer programmierbaren Hardware-

4

komponente ausgeführt wird.

Mit Hilfe des erfindungsgemäßen Verfahrens können gezielt Störsignale mit Autokorrelationseigenschaften aus einer festen Einfallsrichtung ausgeblendet werden. Diffuse oder sogar räumlich korrelierte Rauschsignale (aus einer bestimmten Einfallsrichtung) werden dabei nur geringfügig unterdrückt. Allgemein können aufgrund der endlichen Freiheitsgrade eines Raumfilters bedingt durch eine endliche Anzahl an Antennenelementen (bzw. Antennenkanälen) der Gruppenantenne nicht alle Störsignale perfekt ausgeblendet werden. Bei den Verfahren, die zum Stand der Technik gehören, wird nur die Leistung eines Störsignals in Betracht gezogen und die Störsignale mit größerer Leistung entsprechend stärker unterdrückt. Verfahren, die unter dem Begriff "diagonal loading" bekannt sind, können dabei allenfalls inkohärente Rauschsignale unterschiedlich gewichten. Daher kann bei bekannten Verfahren der Fall eintreten, dass Störsignale mit zeitlichen Korrelationen nicht ausreichend unterdrückt werden, da leistungsstärkere Rauschsignale vorhanden sind, die auf Kosten der Störunterdrückung der zeitlich korrelierten Signale stärker ausgeblendet werden. Das erfindungsgemäße Verfahren erlaubt es, gezielt Störsignale, die zeitliche Korrelationen besitzen, stärker auszublenden als zeitlich unkorrelierte Rauschsignale. Insbesondere können mit dem erfindungsgemäßen Verfahren gezielt die Zeitverzögerungen ausgewählt werden, zu denen die Leistung des zeitlich korrelierten Störsignals bei der Filterberechnung in Betracht gezogen wird.

**Figurenkurzbeschreibung**

Einige Beispiele von Vorrichtungen und Verfahren werden nachfolgend bezugnehmend auf die beiliegenden Figuren lediglich beispielhaft näher erläutert. Es zeigen

Fig. 1    ein Ablaufdiagramm eines Ausführungsbeispiels eines Verfahrens zur Raumfilterung zumindest eines autokorrelierten Nutzsignals aus einem Empfangssignal einer Gruppenantenne;

Fig. 2    ein Ausführungsbeispiel eines Musters eines autokorrelierten Nutzsignals;

Fig. 3    ein Ausführungsbeispiel eines Musters eines autokorrelierten Störsignals;

Fig. 4    ein Ausführungsbeispiel einer Überlagerung der in Figs. 2 und 3 gezeigten Signale;

Fig. 5    einen beispielhaften Vergleich der Richtungsabhängigkeit eines Raumfilters gemäß dem vorgeschlagenen Verfahren und eines Raumfilters gemäß dem MVDR-Verfahren;

Fig. 6    ein gemäß dem MVDR-Verfahren gefiltertes Nutzsignal;

Fig. 7    ein gemäß dem vorgeschlagenen Verfahren gefiltertes Nutzsignal; und

Fig. 8    ein Ausführungsbeispiel einer Vorrichtung zur Raumfilterung zumindest eines autokorrelierten Nutzsignals aus einem Empfangssignal einer Gruppenantenne.

**Beschreibung**

Verschiedene Ausführungsbeispiele werden nun ausführlicher und bezugnehmend auf die beiliegenden Figuren näher beschrieben.

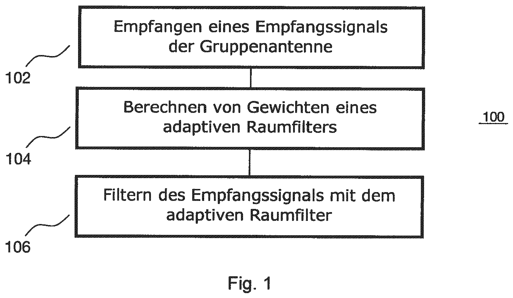

Fig. 1 zeigt ein Ablaufdiagramm eines Verfahrens 100 zur Raumfilterung zumindest eines autokorrelierten Nutzsignals (Zielsignals) aus einem Empfangssignal einer Gruppenantenne (d.h. gemäß Verfahren 100 können auch mehrere autokorrelierte Nutzsignale aus dem Empfangssignal gefiltert werden). Die Gruppenantenne umfasst eine Mehrzahl an Antennenkanälen (d.h. eine Mehrzahl an Antennenelementen).

Das Verfahren 100 umfasst das Empfangen 102 des Empfangssignals der Gruppenantenne. Das Empfangssignal kann dabei allgemein auch als Empfangsdaten der Gruppenantenne aufgefasst werden.

Ferner umfasst das Verfahren 100 das Berechnen 104 von Gewichten eines adaptiven Raumfilters für die einzelnen Antennenkanäle der Mehrzahl an Antennenkanälen.

Weiterhin umfasst das Verfahren 100 das Filtern 106 des Empfangssignals mit dem adaptiven Raumfilter, um das zumindest eine autokorrelierte Nutzsignal aus dem Empfangssignal zu extrahieren.

Erfindungsgemäß umfasst das Berechnen 104 der Gewichte des adaptiven Raumfilters ein Optimieren der Summe der Betragsquadrate der Autokorrelationen des Ausgangssignals des adaptiven Raumfilters (d.h. des gefilterten Signals) für eine Mehrzahl an Zeitverzögerungen unter der Nebenbedingung einer konstanten Filterantwort des adaptiven Raumfilters bezüglich des Steuerungsvektors für das zumindest eine autokorrelierte Nutzsignal, das aus dem Empfangssignal gefiltert werden soll. Explizit lautet das erfindungsgemäße Optimierungsproblem somit wie folgt:

$$\min_{\boldsymbol{w}} \sum_{\tau} |\boldsymbol{w}^H \boldsymbol{R}_x(\tau)\boldsymbol{w}|^2 \quad \text{mit} \quad \boldsymbol{w}^H \boldsymbol{a}(\vartheta) = 1 \qquad (7)$$

Das Optimierungsproblem beinhaltet die Berechnung der zeitverzögerten Kreuz-Kovarianz-Matrizen $\boldsymbol{R}_x(\tau)$ zu frei wählbaren Zeitverzögerungen $\tau$. Diese ergeben sich, wenn man den Erwartungswert der Kreuzkorrelationen der Antennenausgänge (d.h. der Antennenkanäle) zu unterschiedlichen Zeitpunkten berechnet:

$$\boldsymbol{R}_x(\tau) = E\big[\boldsymbol{x}(t + \tau)\boldsymbol{x}^H(t)\big] \qquad (8)$$

In der Literatur wird die zeitverzögerte Kreuz-Kovarianz-Matrix auch als "space-time covariance matrix" oder "auto-cross-covariance matrix" bezeichnet. In der Praxis werden die Erwartungswerte durch den Mittelwert

$$\hat{\boldsymbol{R}}_x(\tau) = \sum_t \boldsymbol{x}(t + \tau)\boldsymbol{x}^H(t) \qquad (9)$$

ersetzt.

Das erfindungsgemäße Optimierungsproblem ist quartisch in den Raumfiltergewichten und kann prinzipiell mit einem beliebigen numerischen Optimierungsverfahren mit beliebigem Startvektor $\boldsymbol{w}_0$ gelöst werden, der, wie bei der iterativen Lösung eines Optimierungsproblems üblich, als Anfangsgröße angenommen werden muss.

Eine spezielle Wahl des Startvektors ergibt sich gemäß Ausführungsbeispielen aus der Beobachtung, dass unter dem Standard-Datenmodell für das Empfangssignal

$$\boldsymbol{x}(t) = \boldsymbol{A}\boldsymbol{s}(t) + \boldsymbol{n}(t) \qquad (10)$$

folgendes Datenmodell für die zeitverzögerten Kreuz-Kovarianz Matrizen gilt:

$$\boldsymbol{R}_x(\tau) = \begin{cases} \boldsymbol{A}\boldsymbol{R}_s(0)\boldsymbol{A}^H + \sigma_n^2\boldsymbol{I} & falls\ \tau = 0, \\ \boldsymbol{A}\boldsymbol{R}_s(\tau)\boldsymbol{A}^H & falls\ \tau > 0 \end{cases} \qquad (11)$$

Dabei bezeichnet $\boldsymbol{A}$ die Steuerungsmatrix, deren Spalten die Steuerungsvektoren des Zielsignals (d.h. des zu filternden autokorrelierten Nutzsignals) sowie der Störsignale enthält. Ferner ist $\boldsymbol{R}_s(\tau) = E[\boldsymbol{s}(t + \tau)\boldsymbol{s}^H(t)]$ die zeitverzögerte Kreuz-Kovarianz-Matrix der Ziel- und Störsignale.

Für $\tau = 0$ ergibt sich die übliche Kovarianz-Matrix, die bei dem MVDR-Raumfilter in Form der Sample-Kovarianz-Matrix Verwendung findet. Wie man anhand der Gleichung (11) sieht, existiert für $\tau > 0$ auf der rechten Seite kein Rauschterm, weil das Rauschen zu unterschiedlichen Zeiten nicht korreliert ist. Das Signal selber besitzt dagegen zeitliche Korrelationen, die bei der Signalklassifikation mittels bekannter Autokorrelationseigenschaften ausgenutzt werden.

Die zeitverzögerten Kreuz-Kovarianz-Matrizen für $\tau > 0$ enthalten damit keinen durch unkorreliertes Rauschen verursachten Anteil oder bei Näherung durch Mittelwertbildung einen deutlich geringeren durch unkorreliertes Rauschen verursachten Anteil.

Ferner macht das erfindungsgemäße Verfahren in einigen Ausführungsbeispielen von einer sogenannten PARAFAC-Zerlegung der zeitverzögerten Kreuz-Kovarianz-Matrizen Gebrauch.

Die zeitverzögerten Kreuz-Kovarianz-Matrizen können unter der Annahme, dass die einzelnen Signale unkorreliert sind, in einer sogenannten PARAFAC (PARAllel FACtor) Zerlegung dargestellt werden. Dafür arrangiert man alle zeitverzögerten Kreuz-Kovarianz-Matrizen in einem dreidimensionalen Array $\mathcal{R}$ (im Folgenden mit 'Kovarianz-Tensor' bezeichnet), welcher die Elemente

$$[\mathcal{R}]_{m,m',l} = [\boldsymbol{R}_x(l)]_{m,m'} = \sum_{p,p'} [\boldsymbol{A}]_{m,p}[\boldsymbol{R}_s(l)]_{p,p'}[\boldsymbol{A}]^*_{m,p'} \qquad (12)$$

besitzt, wobei * die komplexe Konjugation bezeichnet.

Unter der Annahme, dass die Quellen für alle Verzögerungen *l* unkorreliert sind, nehmen die Signal-Kovarianz-Matrizen Diagonalgestalt an:

$$[\boldsymbol{R}_s(l)]_{p,p'} = [\boldsymbol{R}_s(l)]_{p,p}\delta_{p,p'} \equiv [\boldsymbol{D}]_{l,p} \quad (13)$$

Wird diese Annahme in Gleichung (12) genutzt, so erhält man eine trilineare Zerlegung des Kovarianz-Tensors:

$$[\mathcal{R}]_{m,m',l} = \sum_p [\boldsymbol{A}]_{m,p}[\boldsymbol{D}]_{l,p}[\boldsymbol{A}]_{m',p}^* \qquad (14)$$

Gebräuchlich ist auch eine Schreibweise, in der die Loading-Vektoren $\boldsymbol{a}_p = [\boldsymbol{A}]_{:,p}$ und $\boldsymbol{r}_p^{(s)} = [\boldsymbol{D}]_{:,p}$ enthalten sind, wobei $[\boldsymbol{A}]_{:,p}$ die p-te Spalte von $\boldsymbol{A}$ und $[\boldsymbol{D}]_{:,p}$ die p-te Spalte von $\boldsymbol{D}$ bezeichnet:

$$\mathcal{R} = \sum_p \boldsymbol{a}_p \circ \boldsymbol{r}_p^{(s)} \circ \boldsymbol{a}_p^* \quad (15)$$

Dabei bezeichnet ∘ das äußere Produkt.

PARAFAC Zerlegungen wurden unter dem Namen "kanonische polyadische Zerlegung mehrdimensionaler Datenarrays" zuerst von F. L. Hitchcock im Jahr 1927 in der Arbeit "The expression of a tensor or a polyadic as a sum of products", Journal of Mathematics and Physics, Vol 6, Seiten 164-189 eingeführt.

Man erhält mittels der PARAFAC-Zerlegung eine gute Näherung für die Steuerungsvektoren der Ziel-und Störsignale und kann so ein angenähertes adaptives Raumfilter konstruieren, indem man zuerst eine Pseudo-Kovarianz-Matrix

$$R_p = \sum_p \alpha_p \boldsymbol{a}_p \boldsymbol{a}_p^H \qquad (16)$$

mit Gewichten berechnet, die die Stärke der Signalkomponenten widerspiegeln, und damit das adaptive Raumfilter

$$\boldsymbol{w}_p = \frac{R_p^{-1}\boldsymbol{a}_p}{\boldsymbol{a}_p^H R_p^{-1}\boldsymbol{a}_p} \qquad (17)$$

erhält.

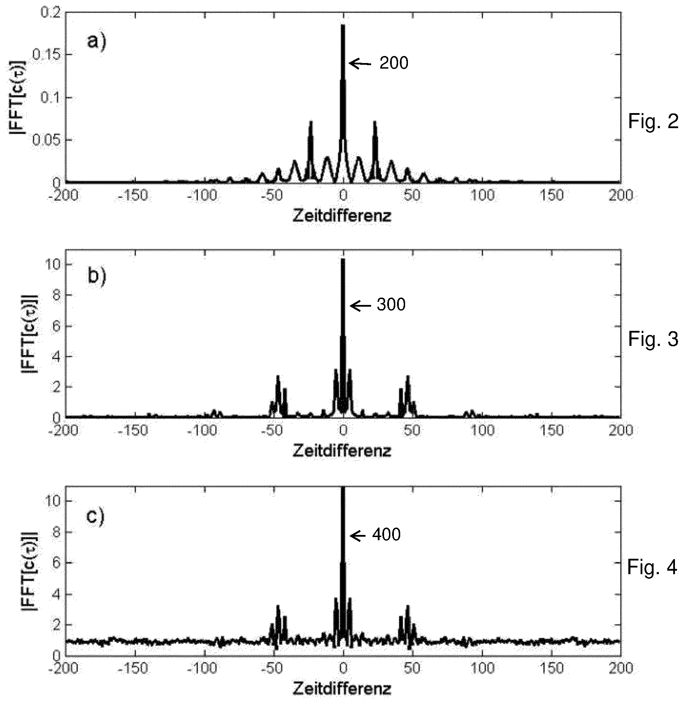

Der Effekt der vorliegenden Erfindung wird im Folgenden mit Bezug auf die Figs. 2 bis 7 anhand eines Ausführungsbeispiels näher erläutert.

Als Beispiel einer Gruppenantenne sei ein uniformes lineares Array mit sechs Antennenelementen (d.h. eine Gruppenantenne mit sechs Antennenkanälen) verwendet. Das sechskanalige Empfangssignal wurde synthetisch aus den folgenden vier Anteilen zusammengesetzt:

Die erste Komponente besteht aus dem zu detektierenden Zielsignal (Nutzsignal), welches in diesem Beispiel ein Vieltonsignal ist. Die Fouriertransformierte 200 der Autokorrelationsfunktion dieses Signals ist in Fig. 2 dargestellt und zeigt die für dieses Signal charakteristischen Peaks anhand derer dieses Signal detektiert werden kann. Dieses zu detektierende Signal besitzt die Einfallsrichtung $u = 0.0$.

Die zweite Komponente ist ein Störsignal mit Frequenz-Shift-Modulation. Die Fouriertransformierte 300 der Autokorrelationsfunktion dieses Signals ist in Fig. 3 dargestellt und ist durch starke Peaks charakterisiert, die an anderen Stellen als denen des Zielsignals liegen. Die Einfallsrichtung des Störsignals wurde auf $u = 0.45$ voreingestellt. Die Leistung des Störsignals ist neunmal so groß wie die des Zielsignals.

Daraus ergibt sich die in Fig. 4 dargestellte Fouriertransformierte 400 der Autokorrelationsfunktion des Summensignals. Die überlagerte Störung ist dabei so stark, dass das Muster des Zielsignals nicht mehr erkennbar ist.

Die dritte Komponente besteht aus einem normalverteilten Rauschsignal aus der Einfallsrichtung $u = 0.3$ mit einer Signalleistung, die sechszehnmal so groß wie die des Störsignals ist. Man beachte, dass die Rauschleistung über den ganzen Frequenzbereich gleichverteilt ist, während die Leistungen des Ziel- und Störsignals in ausgewählten Frequenzbereichen deutlich erhöht sind. Die vierte Komponente besteht aus normalverteiltem, räumlich inkohärentem Rauschen, welches allen Antennenkanälen überlagert ist. Die Leistung des Rauschens ist an jedem Antennenelement viermal so groß wie die Leistung des Störsignals. Die Bandbreite des Rauschens ist ungefähr viermal so groß wie die des Zielsignals.

Die Anzahl der Abtastwerte beträgt $N$ = 10000.

Auf Basis dieses Empfangssignals wurde einerseits das bekannte MVDR-Raumfilter $w_{MVDR}$ und andererseits das Raumfilter $w$ nach dem erfindungsgemäßen Verfahren berechnet. Bei der Berechung des erfindungsgemäßen Raumfilters wurden $L$ = 100 Zeitverzögerungen im Kovarianz-Tensor in Betracht gezogen und es wurde die Initialisierung nach Gleichung (17) mit $p$ = 6 Komponenten verwendet.

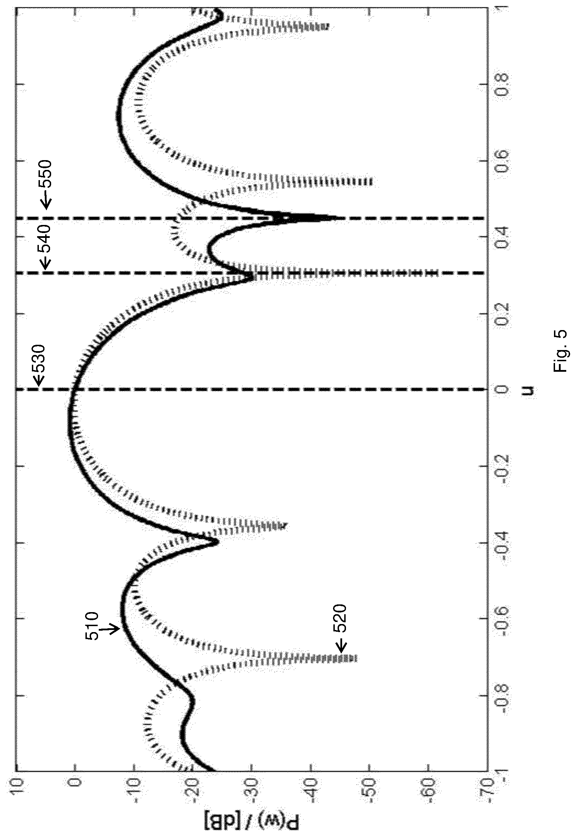

In Fig. 5 sind die Richtungsabhängigkeit des Raumfilters nach dem erfindungsgemäßen Verfahren (Linie 510) sowie des Raumfilters nach dem MVDR Verfahren (Linie 520) dargestellt. Die Linien 530, 540 und 550 geben die Richtungen des Zielsignals ($u$ = 0.0), des räumlich korrelierten Rauschsignals ($u$ = 0.3) sowie des Störsignals ($u$ = 0.45) an. Zunächst sieht man, dass beide Raumfilter die Hauptkeule recht gut in Richtung des Zielsignals ausgerichtet haben, wobei die Hauptkeule des erfindungsgemäßen Verfahrens einen etwas größeren Bias aufweist und das Maximum nach links verschoben bei $u \approx$ -0.1 liegt. Die Nebenbedingung, dass der Filterausgang in Richtung des Zielsignals bei $u$ = 0.0 genau eins ist, ist bei beiden Verfahren erfüllt.

Man erkennt die folgenden vorteilhaften Effekte des erfindungsgemäßen Verfahrens: Das Störsignal mit Einfallsrichtung $u$ = 0.45 wird mit dem erfindungsgemäßen Verfahren deutlich stärker unterdrückt als mit dem MVDR-Filter. Der MVDR-Filter erreicht zwar auch eine wahrnehmbare Störunterdrückung, was mittels Vergleich der beiden Kurven 510 und 520 an der spiegelsymmetrischen Stelle $u$ = -0.45 deutlich wird. Aber das erfindungsgemäße Verfahren erreicht eine um fast 30 dB stärkere Störunterdrückung. Dies liegt daran, dass der MVDR-Filter eher versucht, dass leistungsstärkere Signal aus der Einfallsrichtung $u$ = 0.3 zu unterdrücken. Das erfindungsgemäße Verfahren versucht nur in geringem Ausmaß, dieses zeitlich unkorrelierte Störsignal zu unterdrücken, da es kaum einen Einfluss auf die nachfolgende Berechnung des Musters basierend auf der Autokorrelation des Signals hat.

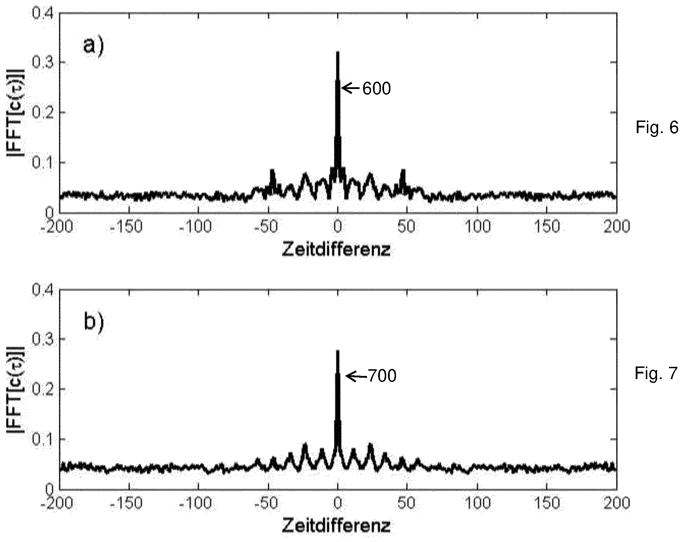

Die Muster der jeweiligen gefilterten Signale sind in Figs. 6 und 7 dargestellt (dargestellt sind jeweils die Beträge der Fouriertransformierten der Autokorrelation der Signale). Das in Fig. 6 dargestellte Muster 600 des mit dem MVDR-Verfahren raumgefilterten Zielsignals zeigt unverändert die störenden Maxima bei $\approx \pm$ 50 Hz. Dagegen sind diese Maxima im in Fig. 7 dargestellten Muster 700 des mit dem erfindungsgemäßen Verfahren raumgefilterten Zielsignals deutlich unterdrückt.

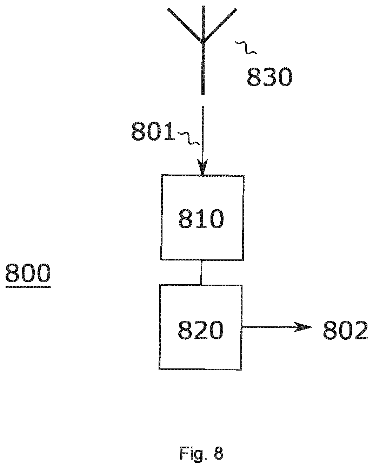

In Fig. 8 ist weiterhin noch ein Ausführungsbeispiel einer Vorrichtung 800 zur Raumfilterung zumindest eines autokorrelierten Nutzsignals aus einem von einer Gruppenantenne 830 bereitgestellten Empfangssignal 801 gezeigt. Die Gruppenantenne 830 umfasst eine Mehrzahl an Antennenkanälen, so dass das Empfangssignal 801 mehrelementig ist.

Die Vorrichtung 800 umfasst eine Eingangsschnittstelle 810 (z.B. als Hardware-Schaltung oder als Software-Schnittstelle implementiert), die dazu eingerichtet ist, das Empfangssignal 801 der Gruppenantenne 830 zu empfangen.

Ferner umfasst die Vorrichtung 800 eine Prozessierschaltung 820, die mit der Eingangsschnittstelle 810 gekoppelt ist.

Beispielsweise kann die Prozessierschaltung 820 ein einzelner dedizierter Prozessor, ein einzelner gemeinsam genutzter Prozessor oder eine Vielzahl von einzelnen Prozessoren, von denen einige oder alle gemeinsam genutzt werden können, eine Digitalsignalprozessor (DSP)-Hardware, ein ASIC oder ein FPGA sein. Die Prozessierschaltung 820 kann optional mit z.B. einem Nurlesespeicher zum Speichern von Software, Direktzugriffsspeicher (RAM = Random Access Memory) und/oder einem nichtflüchtigen Speicher gekoppelt sein. Die Vorrichtung 800 kann ferner andere Hardware umfassen, und zwar konventionelle und/oder kundenspezifische.

Die Prozessierschaltung 820 verarbeitet das Empfangssignal 801 der Gruppenantenne 830 gemäß dem erfindungsgemäßen Verfahren, um zumindest ein autokorreliertes Nutzsignal 802 aus dem Empfangssignal 801 zu extrahieren.

Wie bereits oben für das erfindungsgemäße Verfahren ausführlich beschrieben, können mittels der Vorrichtung 800 gezielt Störsignale mit Autokorrelationseigenschaften aus einer festen Einfallsrichtung ausgeblendet werden. Ferner können gezielt Störsignale, die zeitliche Korrelationen besitzen, stärker ausgeblendet werden als zeitlich unkorrelierte Rauschsignale.

Die Anwendungsgebiete der Erfindung erstrecken sich vom Bereich der Funkaufklärung über die Überwachung und dem Monitoring von Funkverkehr bis hin zum nicht autorisierten beziehungsweise nicht kooperativen Empfang. Das erfindungsgemäße Verfahren ist einerseits zur Detektion beziehungsweise Erkennung von vorhandenen Nutzsignalen als auch zur Entdeckung unbekannter Nutzsignale einsetzbar.

**Patentansprüche**

1. Verfahren (100) zur Raumfilterung zumindest eines autokorrelierten Nutzsignals mit bekannten Autokorrelationseigenschaften aus einem Empfangssignal einer Gruppenantenne, das Verfahren (100) umfassend:

- Empfangen (102) des Empfangssignals der Gruppenantenne, wobei die Gruppenantenne eine Mehrzahl an Antennenkanälen umfasst;
- Berechnen (104) von Gewichten eines adaptiven Raumfilters für die einzelnen Antennenkanäle der Mehrzahl an Antennenkanälen; und
- Filtern (106) des Empfangssignals mit dem adaptiven Raumfilter, um das zumindest eine autokorrelierte Nutzsignal aus dem Empfangssignal zu extrahieren,

**dadurch gekennzeichnet, dass**

- das Berechnen (104) der Gewichte des adaptiven Raumfilters $w$ ein Optimieren einer Summe von Betragsquadraten von Autokorrelationen eines Ausgangssignals des adaptiven Raumfilters für eine Mehrzahl an Zeitverzögerungen unter der Nebenbedingung einer konstanten Filterantwort des adaptiven Raumfilters bezüglich eines das zumindest eine autokorrelierte Nutzsignal beschreibenden Steuerungsvektors $a(\vartheta)$ gemäß folgender Gleichung umfasst,

$$\min_{w} \sum_{\tau} \left| w^H R_x(\tau) w \right|^2 \quad \text{mit} \quad w^H a(\vartheta) = 1$$

,

- wobei die zeitverzögerten Kreuz-Kovarianz-Matrizen zu frei wählbaren Zeitverzögerungen $\tau$ gegeben sind durch

$$R_x(\tau) = E\left[ x(t+\tau) x^H(t) \right]$$

mit x(t) dem Empfangssignal der Gruppenantenne und E dem Erwartungswert.

2. Verfahren (100) nach Anspruch 1, **dadurch gekennzeichnet, dass** die Mehrzahl an Zeitverzögerungen frei wählbar sind.

3. Verfahren (100) nach Anspruch 1 oder Anspruch 2, **dadurch gekennzeichnet, dass** das Optimieren der Summe der Betragsquadrate der Autokorrelationen des Ausgangssignals des adaptiven Raumfilters für die Mehrzahl an Zeitverzögerungen mit einem frei wählbaren Startvektor $w0$ gelöst wird, der, wie bei der iterativen Lösung eines Optimierungsproblems üblich, als Anfangsgröße angenommen werden muss.

4. Verfahren (100) nach einem der Ansprüche 1 bis 3, **dadurch gekennzeichnet, dass** das Optimieren der Summe der Betragsquadrate der Autokorrelationen des Ausgangssignals des adaptiven Raumfilters für die Mehrzahl an Zeitverzögerungen ein Berechnen zeitverzögerter Kreuz-Kovarianz-Matrizen für die Mehrzahl an Zeitverzögerungen umfasst, und dass das Optimieren der Summe der Betragsquadrate der Autokorrelationen des Ausgangssignals des adaptiven Raumfilters für die Mehrzahl an Zeitverzögerungen mit einem Startvektor initialisiert wird, der, wie bei der iterativen Lösung eines Optimierungsproblems üblich, als Anfangsgröße angenommen werden muss und der durch das Produkt eines Loading-Vektors einer PARAFAC-Zerlegung der zeitverzögerten Kreuz-Kovarianz-Matrizen und einer inversen Matrix einer gewichteten Summe eines äußeren Produkts jeweils zweier Loading-Vektoren der PARAFAC-Zerlegung der zeitverzögerten Kreuz-Kovarianz-Matrizen bestimmt ist.

5. Programm mit einem Programmcode zum Durchführen des Verfahrens (100) gemäß einem der Ansprüche 1 bis 4, wenn das Programm auf einem Prozessor oder einer programmierbaren Hardwarekomponente ausgeführt wird.

6. Nicht-flüchtiges maschinenlesbares Medium, auf dem ein Programm gespeichert ist mit einem Programmcode zum Durchführen des Verfahrens (100) gemäß einem der Ansprüche 1 bis 4, wenn das Programm auf einem Prozessor oder einer programmierbaren Hardwarekomponente ausgeführt wird.

7. Vorrichtung (800) zur Raumfilterung zumindest eines autokorrelierten Nutzsignals (802) mit bekannten Autokorrelationseigenschaften aus einem Empfangssignal (801) einer Gruppenantenne (830), die Vorrichtung (800) umfassend

- eine Eingangsschnittstelle (810), die dazu eingerichtet ist, das Empfangssignal (801) der Gruppenantenne (830) zu empfangen, wobei die Gruppenantenne (830) eine Mehrzahl an Antennenkanälen umfasst; und
- eine Prozessierschaltung (820), die dazu eingerichtet ist:

- Gewichte eines adaptiven Raumfilters für die einzelnen Antennenkanäle der Mehrzahl an Antennenkanälen zu berechnen; und
- das Empfangssignal (801) mit dem adaptiven Raumfilter zu filtern, um das zumindest eine autokorrelierte Nutzsignal (802) aus dem Empfangssignal (801) zu extrahieren,

**dadurch gekennzeichnet, dass**

- die Prozessierschaltung (820) dazu eingerichtet ist, die Gewichte des adaptiven Raumfilters *w* durch ein Optimieren einer Summe von Betragsquadraten von Autokorrelationen eines Ausgangssignals des adaptiven Raumfilters für eine Mehrzahl an Zeitverzögerungen unter der Nebenbedingung einer konstanten Filterantwort des adaptiven Raumfilters bezüglich eines das zumindest eine autokorrelierte Nutzsignal beschreibenden Steuerungsvektor *a(ϑ)* gemäß folgender Gleichung zu berechnen,

$$\min_{\boldsymbol{w}} \sum_{\tau} \left| \boldsymbol{w}^H \boldsymbol{R}_x(\tau) \boldsymbol{w} \right|^2 \quad \text{mit} \quad \boldsymbol{w}^H \boldsymbol{a}(\vartheta) = 1$$

,

wobei die zeitverzögerten Kreuz-Kovarianz-Matrizen zu frei wählbaren Zeitverzögerungen $\tau$ gegeben sind durch

$$\boldsymbol{R}_x(\tau) = E\big[\boldsymbol{x}(t+\tau)\boldsymbol{x}^H(t)\big]$$

mit *x(t)* dem Empfangssignal der Gruppenantenne und *E* dem Erwartungswert.

8. Vorrichtung (800) nach Anspruch 7, **dadurch gekennzeichnet, dass** die Mehrzahl an Zeitverzögerungen frei wählbar sind.

9. Vorrichtung (800) nach Anspruch 7 oder Anspruch 8, **dadurch gekennzeichnet, dass** die Prozessierschaltung (820) dazu eingerichtet ist, das Optimieren der Summe der Betragsquadrate der Autokorrelationen des Ausgangssignals des adaptiven Raumfilters für die Mehrzahl an Zeitverzögerungen mit einem frei wählbaren Startvektor *w*0 zu lösen, der, wie bei der iterativen Lösung eines Optimierungsproblems üblich, als Anfangsgröße angenommen werden muss.

10. Vorrichtung (800) nach einem der Ansprüche 7 bis 9, **dadurch gekennzeichnet, dass** die Prozessierschaltung (820) dazu eingerichtet ist:

- zeitverzögerte Kreuz-Kovarianz-Matrizen für die Mehrzahl an Zeitverzögerungen zu berechnen beim Optimieren der Summe der Betragsquadrate der Autokorrelationen des Ausgangssignals des adaptiven Raumfilters für die Mehrzahl an Zeitverzögerungen; und
- das Optimieren der Summe der Betragsquadraten der Autokorrelationen des Ausgangssignals des adaptiven Raumfilters für die Mehrzahl an Zeitverzögerungen mit einem Startvektor *w*0 zu initiieren, der, wie bei der iterativen Lösung eines Optimierungsproblems üblich, als Anfangsgröße angenommen werden muss und der durch das Produkt eines Loading-Vektors einer PARAFAC-Zerlegung der zeitverzögerten Kreuz-Kovarianz-Matrizen und einer inversen Matrix einer gewichteten Summe eines äußeren Produkts jeweils zweier Loading-Vektoren der PARAFAC-Zerlegung der zeitverzögerten Kreuz-Kovarianz-Matrizen bestimmt ist.

**Claims**

1. A method (100) for spatial filtering of at least one autocorrelated useful signal with known autocorrelation characteristics from a received signal of a group antenna, the method (100) comprising the steps of:

- receiving (102) the received signal of the group antenna, the group antenna comprising a plurality of antenna channels;
- calculating (104) weights of an adaptive spatial filter for the individual antenna channels of the plurality of antenna channels; and
- filtering (106) the received signal by the adaptive spatial filter to extract the at least one autocorrelated useful signal from the received signal,

**characterized in that**

- calculating (104) the weights of the adaptive spatial filter w comprises an optimization of a sum of squared magnitudes of autocorrelations of an output signal of the adaptive spatial filter for a plurality of time delays under the secondary condition of a constant filter response of the adaptive spatial filter with respect to a control vector $a(\vartheta)$ describing the at least one autocorrelated useful signal according to the following equation:

$$\min_{\boldsymbol{w}} \sum_{\tau} \left| \boldsymbol{w}^H \boldsymbol{R}_x(\tau) \boldsymbol{w} \right|^2 \quad \text{mit} \quad \boldsymbol{w}^H \boldsymbol{a}(\vartheta) = 1$$

- the time-delayed cross-covariance matrices for freely selectable time delays $\tau$ are given by

$$\boldsymbol{R}_x(\tau) = E\left[\boldsymbol{x}(t+\tau)\boldsymbol{x}^H(t)\right]$$

where $x(t)$ is the received signal of the group antenna and $E$ is the expected value.

2. The method (100) according to claim 1, **characterized in that** the plurality of time delays is freely selectable.

3. The method (100) according to claim 1 or claim 2, **characterized in that** optimizing the sum of the squared magnitudes of the autocorrelations of the output signal of the adaptive spatial filter for the plurality of time delays is solved with a freely selectable start vector w0 which, as usual with the iterative solution of an optimization problem, has to be assumed as an initial value.

4. The method (100) according to one of claims 1 to 3, **characterized in that** optimizing the sum of the squared magnitudes of the autocorrelations of the output signal of the adaptive spatial filter for the plurality of time delays comprises calculating time-delayed cross-covariance matrices for the plurality of time delays, and **in that** optimizing the sum of the squared magnitudes of the autocorrelations of the output signal of the adaptive spatial filter for the plurality of time delays is initiated using a start vector which, as usual with the iterative solution of an optimization problem, has to be assumed as an initial value and which is determined by the product of a loading vector of a PAPA-FAC decomposition of the time-delayed cross -covariance matrices and an inverse matrix of a weighted sum of an outer product of two respective loading vectors of the PARAFAC decomposition of the time-delayed cross-covariance matrix.

5. A program comprising a program code for executing the method (100) according to one of claims 1 to 4, when the program is executed on a processor or a programmable hardware component.

6. A non-volatile machine-readable medium which stores a program comprising a program code for executing the method (100) according to one of claims 1 to 4, when the program is executed on a processor or a programmable hardware component.

7. A device (800) for spatial filtering of at least one autocorrelated useful signal (802) with known autocorrelation characteristics from a received signal (801) of a group antenna (830), the device (800) comprising:

- an input interface (810) configured to receive the received signal (01) of the group antenna (830), the group antenna (830) comprising a plurality of antenna channels;
- a processing (820) configured to:
- calculate weights of an adaptive spatial filter for the individual antenna channels of the plurality of antenna channels; and
- filter the received signal (801) by the adaptive spatial filter to extract the at least one autocorrelated useful signal (802) from the received signal (801),
**characterized in that**
- the processing circuit (820) is configured to calculate the weights of the adaptive spatial filter w comprises an optimization of a sum of squared magnitudes of autocorrelations of an output signal of the adaptive spatial filter for a plurality of time delays under the secondary condition of a constant filter response of the adaptive spatial filter with respect to a control vector $a(\vartheta)$ describing the at least one autocorrelated useful signal according to the following equation:

$$\min_{\boldsymbol{w}} \sum_{\tau} \left| \boldsymbol{w}^{H} \boldsymbol{R}_{x}(\tau)\boldsymbol{w} \right|^{2} \quad \text{mit} \quad \boldsymbol{w}^{H}\boldsymbol{a}(\vartheta) = 1$$

- the time-delayed cross-covariance matrices for freely selectable time delays $\tau$ are given by

$$\boldsymbol{R}_{x}(\tau) = E\left[\boldsymbol{x}(t+\tau)\boldsymbol{x}^{H}(t)\right]$$

where $\boldsymbol{x}(t)$ is the received signal of the group antenna and $E$ is the expected value.

8. The device (800) according to claim 7, **characterized in that** the plurality of time delays is freely selectable.

9. The device (800) according to claim 7 or claim 8, **characterized in that** the processing circuit (820) is configured to solve the optimization of the sum of the squared magnitudes of the autocorrelations of the output signal of the adaptive spatial filter for the plurality of time delays with a freely selectable start vector w0 which, as usual with the iterative solution of an optimization problem, has to be assumed as an initial value.

10. The device (800) according to one of claims 7 to 9, **characterized in that** the processing circuit (820) is configured to:

- when optimizing the sum of the squared magnitudes of the autocorrelations of the output signal of the adaptive spatial filter for the plurality of time delays, to calculate time-delayed cross-covariance matrices for the plurality of time delays, and
- to initiate the optimization of the sum of the squared magnitudes of the autocorrelations of the output signal of the adaptive spatial filter for the plurality of time delays is initiated using a start vector which, as usual with the iterative solution of an optimization problem, has to be assumed as an initial value and which is determined by the product of a loading vector of a PARAFAC decomposition of the time-delayed cross-covariance matrices and an inverse matrix of a weighted sum of an outer product of two respective loading vectors of the PARAFAC decomposition of the time-delayed cross-covariance matrix.

**Revendications**

1. Procédé (100) de filtrage spatial d'au moins un signal utile autocorrélé ayant des caractéristiques d'autocorrélation connues à partir d'un signal de réception d'une antenne en réseau, le procédé (100) comprenant :

- la réception (102) du signal de réception de l'antenne en réseau, l'antenne en réseau comprenant une pluralité de canaux d'antenne ;
- le calcul (104) de poids d'un filtre spatial adaptatif pour les différents canaux d'antenne de la pluralité de canaux d'antenne ; et
- le filtrage (106) du signal de réception avec le filtre spatial adaptatif pour extraire du signal de réception l'au moins un signal utile autocorrélé, **caractérisé en ce que**
- le calcul (104) des poids du filtre spatial adaptatif w comprend une optimisation d'une somme de carrés d'autocorrélations d'un signal de sortie du filtre spatial adaptatif pour une pluralité de retards sous réserve annexe d'une réponse de filtre constante du filtre spatial adaptatif en ce qui concerne un vecteur de commande $\boldsymbol{a}(\vartheta)$ décrivant l'au moins un signal utile autocorrélé, selon l'équation suivante

$$\min_{\boldsymbol{w}} \sum_{\tau} \left| \boldsymbol{w}^{H} \boldsymbol{R}_{x}(\tau)\boldsymbol{w} \right|^{2} \quad \text{où} \quad \boldsymbol{w}^{H}\boldsymbol{a}(\vartheta) = 1$$

- les matrices de covariance croisée $\tau$ retardées de retards qui peuvent être librement choisis étant données par

$$\boldsymbol{R}_{x}(\tau) = E\left[\boldsymbol{x}(t+\tau)\boldsymbol{x}^{H}(t)\right]$$

où $x(t)$ est le signal de réception de l'antenne en réseau et E la valeur attendue.

**2.** Procédé (100) selon la revendication 1, **caractérisé en ce que** la pluralité de retards peuvent être librement choisis.

**3.** Procédé (100) selon la revendication 1 ou la revendication 2, **caractérisé en ce que** l'optimisation de la somme des carrés des autocorrélations du signal de sortie du filtre spatial adaptatif pour la pluralité de retards est résolue avec un vecteur initial $w0$ pouvant être librement choisi qui, comme cela est habituel lors de la résolution itérative d'un problème d'optimisation, doit être adopté en tant que grandeur initiale.

**4.** Procédé (100) selon l'une des revendications 1 à 3, **caractérisé en ce que** l'optimisation de la somme des carrés des autocorrélations du signal de sortie du filtre spatial adaptatif pour la pluralité de retards comprend un calcul de matrices de covariance croisée retardées pour la pluralité de retards, et **en ce que** l'optimisation de la somme des carrés des autocorrélations du signal de sortie du filtre spatial adaptatif pour la pluralité de retards est initialisée avec un vecteur initial qui, comme cela est habituel lors de la résolution itérative d'un problème d'optimisation, doit être adopté en tant que grandeur initiale et qui est défini par le produit d'un vecteur de charge d'une décomposition PARAFAC des matrices de covariance croisée retardées et d'une matrice inverse d'une somme pondérée d'un produit extérieur de respectivement deux vecteurs de charge de la décomposition PARAFAC des matrices de covariance croisée retardées.

**5.** Programme avec un code de programme pour la réalisation du procédé (100) selon l'une des revendications 1 à 4 quand le programme est exécuté sur un processeur ou un composant matériel programmable.

**6.** Support non volatile lisible par machine sur lequel est stocké un programme avec un code de programme pour la réalisation du procédé (100) selon l'une des revendications 1 à 4 quand le programme est exécuté sur un processeur ou sur un composant matériel programmable.

**7.** Dispositif (800) de filtrage spatial d'au moins un signal utile (802) autocorrélé ayant des caractéristiques d'autocorrélation connues à partir d'un signal de réception (801) d'une antenne en réseau (830), le dispositif (800) comprenant :

- une interface d'entrée (810) qui est agencée pour recevoir le signal de réception (801) de l'antenne en réseau (830), l'antenne en réseau (830) comprenant une pluralité de canaux d'antenne, et
- un circuit de traitement (820) qui est agencé :
- pour calculer des poids d'un filtre spatial adaptatif pour les différents canaux d'antenne de la pluralité de canaux d'antenne ; et
- pour filtrer le signal de réception (801) avec le filtre spatial adaptatif afin d'extraire du signal de réception (801) l'au moins un signal utile (802) autocorrélé,
**caractérisé en ce que**
- le circuit de traitement (820) est agencé pour calculer les poids du filtre spatial adaptatif $w$ par une optimisation d'une somme de carrés d'autocorrélations d'un signal de sortie du filtre spatial adaptatif pour une pluralité de retards sous réserve annexe d'une réponse de filtre constante du filtre spatial adaptatif en ce qui concerne un vecteur de commande $a(\vartheta)$ décrivant l'au moins un signal utile autocorrélé, selon l'équation suivante

$$\min_{w} \sum_{\tau} \left| w^{H} R_{x}(\tau) w \right|^{2} \quad \text{où} \quad w^{H} a(\vartheta) = 1$$

les matrices de covariance croisée $\tau$ retardées de retards qui peuvent être librement choisis étant données par

$$R_{x}(\tau) = E\left[ x(t + \tau) x^{H}(t) \right]$$

où $x(t)$ est le signal de réception de l'antenne en réseau et $E$ la valeur attendue.

**8.** Dispositif (800) selon la revendication 7, **caractérisé en ce que** la pluralité de retards peuvent être choisis librement.

**9.** Dispositif (800) selon la revendication 7 ou la revendication 8, **caractérisé en ce que** le circuit de traitement (820) est agencé pour résoudre l'optimisation de la somme des carrés des autocorrélations du signal de sortie du filtre spatial adaptatif pour la pluralité de retards avec un vecteur initial $w0$ pouvant être librement choisi qui, comme cela est habituel lors de la résolution itérative d'un problème d'optimisation, doit être adopté en tant que grandeur initiale.

**10.** Dispositif (800) selon l'une des revendications 7 à 9, **caractérisé en ce que** le circuit de traitement (820) est agencé :

- pour calculer des matrices de covariance croisée retardées pour la pluralité de retards lors de l'optimisation de la somme des carrés des autocorrélations du signal de sortie du filtre spatial adaptatif pour la pluralité de retards ; et
- pour commencer l'optimisation de la somme des carrés des autocorrélations du signal de sortie du filtre spatial adaptatif pour la pluralité de retards avec un vecteur initial $w0$ qui, comme cela est habituel lors de la résolution itérative d'un problème d'optimisation, doit être adopté en tant que grandeur initiale et qui est défini par le produit d'un vecteur de charge d'une décomposition PARAFAC des matrices de covariance croisée retardées et d'une matrice inverse d'une somme pondérée d'un produit extérieur de respectivement deux vecteurs de charge de la décomposition PARAFAC des matrices de covariance croisée retardées.

Empfangen eines Empfangssignals
der Gruppenantenne

102

Berechnen von Gewichten eines
adaptiven Raumfilters

100

104

Filtern des Empfangssignals mit dem
adaptiven Raumfilter

106

Fig. 1

Fig. 2

Fig. 3

Fig. 4

Fig. 5

Fig. 6

Fig. 7

830

801

810

800

820 → 802

Fig. 8

**EP 3 793 101 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1543665 B

- DE 102009035524 A

**In der Beschreibung aufgeführte Nicht-Patentliteratur**

- **Y. W. LEE ; T. P. CHEATHAM, JR. ; J. B. WIESNER.** The application of correlation functions in the detection of small signals in noise. *Tech. Rep. of Massachusetts Inst. of Technology,* Oktober 1949
- **YUNG-FANG CHEN ; MICHAEL D. ZOLTOWSKI ; JAVIER RAMOS ; CHANCHAL CHATTERJEE ; VWANI R. ROYCHOWDHURY.** Reduced-Dimension Blind Space-Time 2-D Rake Receivers for DS-CDMA Communication Systems. *IEEE Trans. Sig. Proc.,* Juni 2000, vol. 48, 1521-1536

- **JAVIER RAMOS ; MICHAEL D. ZOLTOWSKI ; HUI LIU.** A Low-Complexity Space-Time RAKE Receiver for DS-CDMA Communications. *IEEE Sig. Proc. Letters,* September 1997, vol. 4, 262-265
- **S. A. VOROBYOV.** Principles of minimum variance robust adaptive beamforming design. *Signal Processing,* 2013, vol. 93, 3264-3277
- **F. L. HITCHCOCK.** The expression of a tensor or a polyadic as a sum of products. *Journal of Mathematics and Physics,* 1927, vol. 6, 164-189